# EUROPEAN PATENT SPECIFICATION

(11) **EP 2 787 575 B1**
(45) Date of publication and mention of the grant of the patent: **11.01.2017**
(21) Application number: 12854142.2
(22) Date of filing: 15.11.2012
(51) Int. Cl.: H01Q 7/06, G06K 19/07, G06K 19/077, H01Q 1/24, H01Q 1/38, H01Q 1/22

(54) **ANTENNA APPARATUS AND COMMUNICATION APPARATUS**
ANTENNENVORRICHTUNG UND KOMMUNIKATIONSVORRICHTUNG
APPAREIL FAISANT ANTENNE ET APPAREIL DE COMMUNICATION

(30) Priority: 29.11.2011 JP 2011260640
(43) Date of publication of application: 08.10.2014
(73) Proprietor: Dexerials Corporation, Tokyo 141-0032 (JP)
(72) Inventor: SAITO, Norio, Tokyo 141-0032 (JP); SUGITA, Satoru, Tokyo 141-0032 (JP); IKEDA, Yoshito, Tokyo 141-0032 (JP)
(74) Representative: Müller Hoffmann & Partner
(86) International application number: PCT/JP2012/079631
(87) International publication number: WO 2013/080804

(56) References cited:
- EP-A1- 1 445 730
- WO-A1-2011/036963
- WO-A1-2011/077877
- WO-A1-2011/077878
- JP-A- 2007 013 662
- JP-A- 2007 194 864
- JP-A- 2008 021 991
- JP-A- 2010 245 776
- JP-A- 2011 229 133

## Description

### Field of the Invention

The present invention relates to an antenna apparatus that is assembled into an electronic apparatus and can be communicated upon receipt of a magnetic field transmitted from a transmitter, and a communication apparatus.

The present application asserts priority rights based on JP Patent Application 2011-260640 filed in Japan on November 29, 2011.

### Background of the Invention

In electronic apparatuses such as portable telephones, an antenna module for an RFID (Radio Frequency Identification) has been used for installing a function for near non-contact communication therein.

This antenna module carries out a communication by utilizing an inductive coupling with an antenna coil mounted on a transmitter such as a reader writer. That is, by allowing its antenna coil to receive a magnetic field from the reader writer, this antenna module converts it into electric power and makes it possible to drive an IC that functions as a communication processing unit.

In order to positively carry out communication, the antenna module needs to receive a magnetic flux of a predetermined value or more by the antenna coil from the reader writer. For this reason, an antenna module according to a conventional example installs a loop coil in a casing of the portable telephone, and receives the magnetic flux from the reader writer by using this coil.

However, in the antenna module assembled into an electronic apparatus such as a portable telephone, since the magnetic flux from the reader writer is repelled by an eddy current that is generated by metals for use in substrates, battery packs or the like inside the apparatus, when they receive a magnetic field from the reader writer, the magnetic flux reaching the loop coil becomes smaller. Since the magnetic flux reaching the loop coil becomes smaller in this manner, the antenna module requires a loop coil having a certain size for collecting required magnetic fluxes, and it is further necessary to use a magnetic sheet so as to increase the magnetic fluxes.

As described above, the magnetic flux from the reader writer is repelled by the eddy current flowing through the substrate of the electronic apparatus such as a portable telephone; however, on the surface of the casing in the electronic apparatus, there is a magnetic field component directed in the in-plane direction of the substrate, and Patent Document 1 has proposed an apparatus in which, by receiving this component, a function for an antenna is exerted. More specifically, Patent Document 1 has proposed an antenna structure in which a coil is wound around a ferrite core so as to reduce the occupied area of the coil.

### Prior-Art Documents

### Patent Document

PTL 1: Japanese Patent Application Laid-Open No. 2008-35464

### Summary of the Invention

As described above, in an electronic apparatus such as a portable telephone, since the substrates or the like that transmit electricity comparatively well are used, a magnetic field is repelled by an eddy current generated in the substrate that has received the magnetic field. For example, when considering the casing surface of the portable telephone, the magnetic field that is applied from the reader writer tends to become stronger on the outer peripheral portion of the casing surface, while it tends to become weaker in the vicinity of the center of the casing surface.

In the case of an antenna using a normal loop coil, the opening portion of the loop coil is positioned in the center portion of the portable telephone that is not allowed to receive the magnetic field passing through the above-mentioned outer peripheral portion of the casing surface so much. For this reason, in the case of an antenna using the normal loop coil, its efficiency for receiving a magnetic field becomes poor.

Moreover, in the case of an antenna structure in which a coil is wound around a ferrite core described in Patent Document 1 and the coil is assembled into the portable telephone, since the cross section of the ferrite core corresponds to the area for use in collecting a magnetic flux, the thickness of the ferrite core of, for example, 1 mm or more is required, with the result that the casing of the portable telephone has a comparatively thick structure. Therefore, this structure is difficult to be installed inside a portable telephone having a comparatively thin size. Moreover, in the case when this antenna module is assembled on the rear side of a liquid crystal display installed on a folding portable telephone, since the thinness thereof is also required, it is difficult that the antenna structure disclosed in Patent Document 1 secures the required space.

WO 2011/077877 A1 and EP 1 445 730 A1 disclose to insert a T-letter shaped magnetic sheet into a center portion of an antenna coil in an antenna apparatus. In the case of WO 2011/077877 A1, two opposite ends of the magnetic sheet coincide with the two opposite ends of the antenna coil. In the case of EP 1 445 730 A1, the two opposite ends of the magnetic sheet even protrude over the two opposite ends of the antenna coil.
WO 2011/077878 A1 and WO 2011/036963 A1 disclose to insert a rectangular magnetic sheet into an antenna coil. In the case of WO 2011/036963 A1, the rectangular sheet protrudes with its two opposite ends over the antenna coil. WO 2011/077878 A1 discloses to arrange a magnetic sheet which is shorter than the antenna coil in such a manner that the antenna coil protrudes at only one side over the magnetic sheet.

The present invention has been proposed in view of these circumstances, and its object is to provide a communication apparatus which, while maintaining a communication characteristic, makes it possible to downsize a casing of an electronic apparatus when assembled into the electronic apparatus.

In order to solve the above-mentioned problems, the present invention relates to an antenna apparatus that is assembled into an electronic apparatus and can be communicated upon receipt of a magnetic field transmitted from a transmitter, and the antenna apparatus is provided with an antenna substrate on which an antenna coil that is inductively coupled to the transmitter is formed, and a T-letter shaped magnetic sheet that draws a magnetic field transmitted from the transmitter into the antenna coil, and this structure is characterized in that the width of the magnetic sheet as measured in the inserting direction is shorter than the width of the antenna coil and the magnetic sheet being inserted in such a manner that since the magnetic sheet is inserted into the center portion of the antenna coil formed on the antenna substrate, the two ends of the magnetic sheet are located at positions closer to the center portion in the inserting direction than the two ends of the antenna coil in the inserting direction.

Moreover, the present invention relates to a communication apparatus that can be communicated upon receipt of a magnetic field transmitted from a transmitter, and the communication apparatus is characterized by having an antenna substrate on which an antenna coil that is inductively coupled to the transmitter is formed, a T-letter shaped magnetic sheet that draws a magnetic field transmitted from the transmitter into the antenna coil, and a communication processing unit that is driven by an electric current flowing through the antenna coil, and carries out communication between the transmitter, and since the magnetic sheet is inserted into the center portion of the antenna coil formed on the antenna substrate, the antenna coil and the magnetic sheet are mutually superimposed in a manner so as to satisfy both of an arrangement condition in which the magnetic sheet is positioned closer to the transmitter than the antenna coil on the upstream side in the proceeding direction of the magnetic field oriented by the casing surface that is opposed to the transmitter and an arrangement condition in which the antenna coil is positioned closer to the transmitter side than the magnetic sheet on the downstream side in the oriented proceeding direction, and the magnetic sheet is characterized in that the width of the magnetic sheet as measured in the inserting direction is shorter than the width of the antenna coil and the magnetic sheet being inserted in such a manner that in the inserting direction into the center portion of the antenna coil, two ends of the magnetic sheet are positioned closer to a center portion than the two ends of the antenna coil.

### Effects of the Invention

In the present invention, in the inserting direction in which the magnetic sheet is inserted into the center portion of the antenna coil, since the two ends of the magnetic sheet are located at positions closer to the center portion than the two ends of the antenna coil so as to efficiently draw a magnetic flux to the center portion of the antenna coil, it is possible to downsize and to make thin a casing of an electronic apparatus, while maintaining good communication characteristic, when the communication device is assembled into the electronic apparatus. Brief Description of Drawings

Figure 1 is a drawing for use in explaining a configuration of a radio communication system in which a radio communication apparatus to which the present invention applied is assembled.
Figure 2 is a drawing for use in explaining a configuration of the communication apparatus that is disposed inside a casing of a portable telephone.
Figure 3(A) is a perspective view showing an antenna module, and Figure 3(B) is a cross-sectional view of the antenna module.
Figures 4(A) and 4(B) are drawings for use in explaining a positional relationship between the two ends of a magnetic sheet and the two ends of an antenna coil in the antenna module to which the present invention is applied.
Figure 5 is a drawing for use in explaining a positional relationship between the two ends of a magnetic sheet and the two ends of an antenna coil in an antenna module according to a comparative example.
Figure 6 is a drawing for use in explaining a change in communication characteristics in the case when a difference between the widths of the antenna coil and the magnetic sheet is changed.
Figure 7(A) is a drawing that shows a configuration in which a sticker layer is stacked on a surface of an antenna substrate so as to be virtually coincident with the width of the magnetic sheet, and Figure 7(B) is a drawing that shows a configuration in which a sticker layer is stacked on a surface of the antenna substrate 11 so as to be virtually coincident with the width of the antenna coil.

### Detailed Description of the Invention

Referring to Figures, the following description will discuss embodiments for carrying out the present invention in detail. Additionally, the present invention is not intended to be limited by the following embodiments.

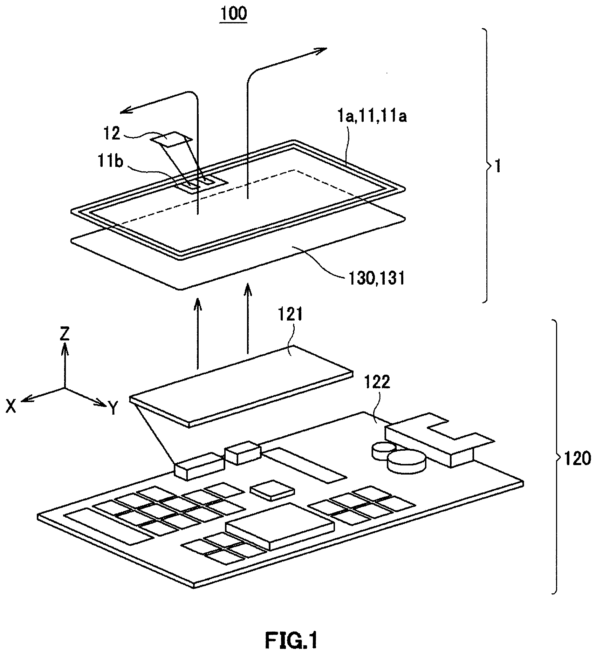

The communication apparatus to which the present invention is applied is an apparatus that is assembled into an electronic apparatus and can be communicated upon receipt of a magnetic field transmitted from a transmitter, and is incorporated into a radio communication system 100 for an RFID (Radio Frequency Identification), for example, as shown in Fig. 1, and used.

The radio communication system 100 is composed of a communication apparatus 1 to which the present invention is applied and a reader writer 120 that accesses the communication apparatus 1. In this case, the communication apparatus 1 and the reader writer 120 are supposed to be disposed so as to be made face to face with each other on the xy plane of a three-dimensional orthogonal coordinate system xyz.

The reader writer 120 functions as a transmitter for transmitting a magnetic field in the z-axis direction to the communication apparatus 1 that is made face to face with each other thereto on the xy plane, and is more specifically provided with an antenna 121 that transmits a magnetic field toward the communication apparatus 1 and a control substrate 122 that communicates with the communication apparatus 1 that is inductively coupled thereto through the antenna 121.

That is, the reader writer 120 is provided with the control substrate 122 that is electrically connected to the antenna 121. On the control substrate 122, a control circuit, which is made of electronic parts, such as one or a plurality of electronic integrated circuit chips, is assembled. The control circuit executes various processes based upon data received from the communication apparatus 1. For example, when transmitting data to the communication apparatus 1, the control circuit encodes data, and based upon the encoded data, modulates a carrier wave having a predetermined frequency (for example, 13.56 MHz), amplifies a modulation signal thus modulated, and drives the antenna 121 by using the amplified modulation signal. Moreover, when reading out data from the communication apparatus 1, the control circuit amplifies the modulation signal of data received by the antenna 121, demodulates the modulation signal of the amplified data, and decodes the data thus demodulated. Additionally, in the control circuit, an encoding system and a modulation system generally used in a reader writer are adopted, and, for example, a Manchester encoding system and an ASK (Amplitude Shift Keying) modulation system are used.

The communication apparatus 1 is provided with an antenna module 1a having an antenna substrate 11 in which an antenna coil 11 a, which is assembled into a casing 131 of a portable telephone 130 disposed so as to be made face to face with, for example, the reader writer 120 on the xy plane, and can be communicated with the reader writer 120 inductively coupled thereto, is assembled, and a communication processing unit 12 that is driven by an electric current flowing through the antenna coil 11a, and communicates with the reader writer 120.

On the antenna substrate 11, the antenna coil 11 a formed by patterning a flexible lead line, such as, for example, a flexible printed substrate, and a terminal unit 11b that electrically connects the antenna coil 11 a with the communication processing unit 12, are assembled.

Upon receipt of a magnetic field transmitted from the reader writer 120, the antenna coil 11a is magnetically coupled with the reader writer 120 by inductive coupling, receives a modulated electromagnetic wave, and supplies the received signal to the communication processing unit 12 through the terminal unit 11b.

The communication processing unit 12 is driven by an electric current flowing through the antenna coil 11 a, and communicates with the reader writer 120. More specifically, the communication processing unit 12 demodulates the modulation signal received, decodes the demodulated data, and writes the decoded data in the inner memory possessed by the communication processing unit 12. Moreover, the communication processing unit 12 reads out data to be transmitted to the reader writer 120 from the inner memory, encodes the data thus read out, modulates a carrier wave based upon the encoded data, and transmits the modulated electric wave to the reader writer 120 through the antenna coil 11 a magnetically coupled thereto by inductive coupling.

In the radio communication system 100 having the above-mentioned configuration, the following description will discuss the configuration of the antenna module 1 a.

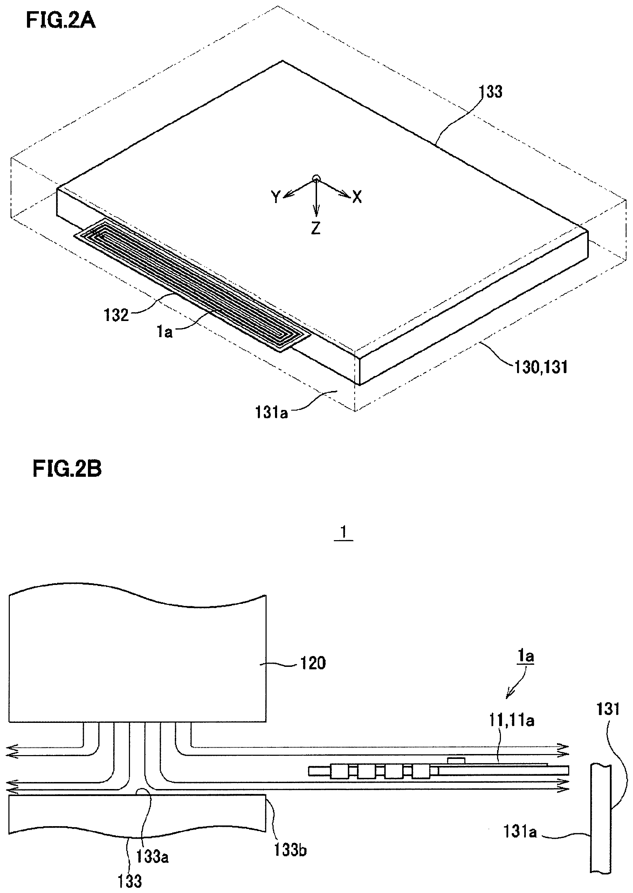

From the viewpoints of downsizing an electronic apparatus when assembled into the electronic apparatus such as a portable telephone 130, and of realizing a good communication characteristic between the reader writer 120, the antenna coil 11a of the antenna module 1a is disposed in a gap 132 between a battery pack 133 installed inside the casing 131 of the portable telephone 130 and an inner circumferential wall 131 a of the casing 131, for example, on the xy plane of the three-dimensional orthogonal coordinate system xyz as shown in Fig. 2(A).

Additionally, the antenna module 1a may be installed not only in the gap 132 between the battery pack 133 and the inner circumferential wall 131a of the casing 131, as described above, but also in a gap between a conductor disposed inside the casing 131, such as, for example, an integrated circuit substrate and the inner circumferential wall of the casing. In the present embodiment, explanations will be made on the assumption that the antenna module is disposed in a gap between the end portion 133b of the metal plate 133a that is made face to face with the reader writer 120 that forms the metal casing of the battery pack 133, as shown in Fig. 2(B), and the inner circumferential wall 131a of the casing 131, as a plate-shaped conductor, for convenience of explanation.

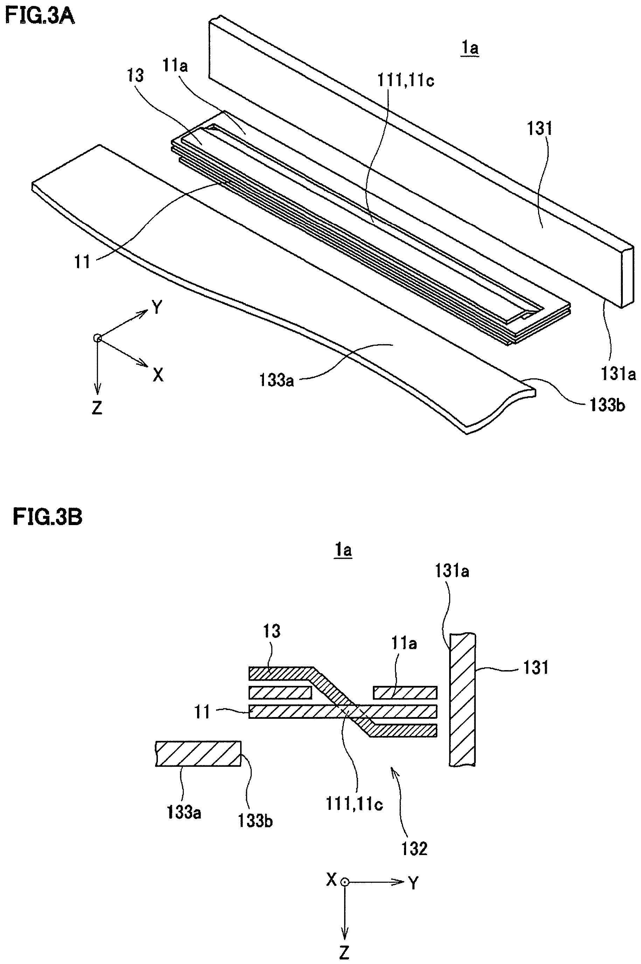

In this case, as shown in the cross-sectional view in Fig. 2(B), since the metal plate 133a serving as the metal casing of the battery pack 133 disposed in the portable telephone 130, that is, as the specific example of the casing surface that is made face to face with the reader writer 120, allows electricity to pass therethrough comparatively well, an eddy current is generated when an AC magnetic field is applied thereto from the outside, with the result that the magnetic field is repelled therefrom. By making an examination about the magnetic field distribution upon application of the AC magnetic field from the outside in this manner, a characteristic is found in which the magnetic field is strong at the end portion 133b of the metal plate 133a of the battery pack 133 that is made face to face with the reader writer 120. More specifically, the magnetic field in the gap 132 in which the antenna module 1a is disposed has a greater component in the y-axis direction. In order to effectively draw such a magnetic field having a greater component in the y-axis direction into the antenna coil 11a, the antenna module 1a is provided with a magnetic sheet 13 that is disposed as shown in Fig. 3, and superimposed on the antenna coil 11 a.

Here, Fig. 3(A) is a perspective view of the antenna substrate 11 in which the magnetic sheet 13 is inserted on the xy plane, and Fig. 3(B) is a cross-sectional view of the antenna substrate 11 in which the magnetic sheet 13 is inserted on the xy plane.

As shown in Fig. 3(B), in the antenna module 1a, the magnetic sheet 13 is inserted into the center portion 11c of the antenna coil 11a formed on the antenna substrate 11 in such a manner that on the upstream side of the proceeding direction of the magnetic field oriented by the metal plate 133 a that is opposed to the reader writer 120, the magnetic sheet 13 is disposed so as to be positioned closer to the reader writer 120 side than the antenna coil 11 a and on the downstream side in the proceeding direction of this oriented magnetic field, the antenna coil 11a is disposed so as to be positioned closer to reader writer 120 side than the magnetic sheet 13.

In this case, the antenna substrate 11 is prepared as a flexible printed substrate, a rigid printed substrate, or the like, as described above, and in particular, by using the flexible printed substrate, a cut-out portion is easily formed in the center portion of the antenna coil 11 a, and the magnetic sheet 13 is easily inserted into this cut-out portion. From the view point of easily inserting the magnetic sheet 13 into the antenna substrate 11, the antenna module 1a is preferably formed into the antenna substrate 11 by using a flexible printed substrate in this manner. Moreover, by using the flexible printed substrate, this antenna module 1 a can be easily produced.

In this manner, the antenna module 1a is designed such that by disposing the magnetic sheet 13 so as to be positioned closer to the reader writer 120 side than the antenna coil 11 a on the upstream side in the proceeding direction of the magnetic field oriented by the metal plate 133a that is made face to face to the reader writer 120, while disposing the antenna coil 11 a so as to be positioned closer to the reader writer 120 side than the magnetic sheet 13 on the downstream side in the proceeding direction of the magnetic field thus oriented, the magnetic field generated in the gap 132 can be effectively drawn into the antenna coil 11a.

Moreover, since the antenna module 1a has a structure in which the antenna coil 11a is wound around so as to allow its opening portion, that is, the center portion 11 c thereof, to be positioned in the gap 132, it becomes possible to downsize the casing 131 when assembled into an electronic apparatus, such as a portable telephone 130.

The reason why the magnetic field generated in the gap 132 is allowed to be effectively drawn in the antenna coil 11a is that by disposing the magnetic sheet 13 as described above, a magnetic field component, which is directed from the end portion 133b of the metal plate 133a toward the inner circumferential wall 131a of the casing 131, is allowed to effectively pass through the opening portion of the antenna coil 11 a.

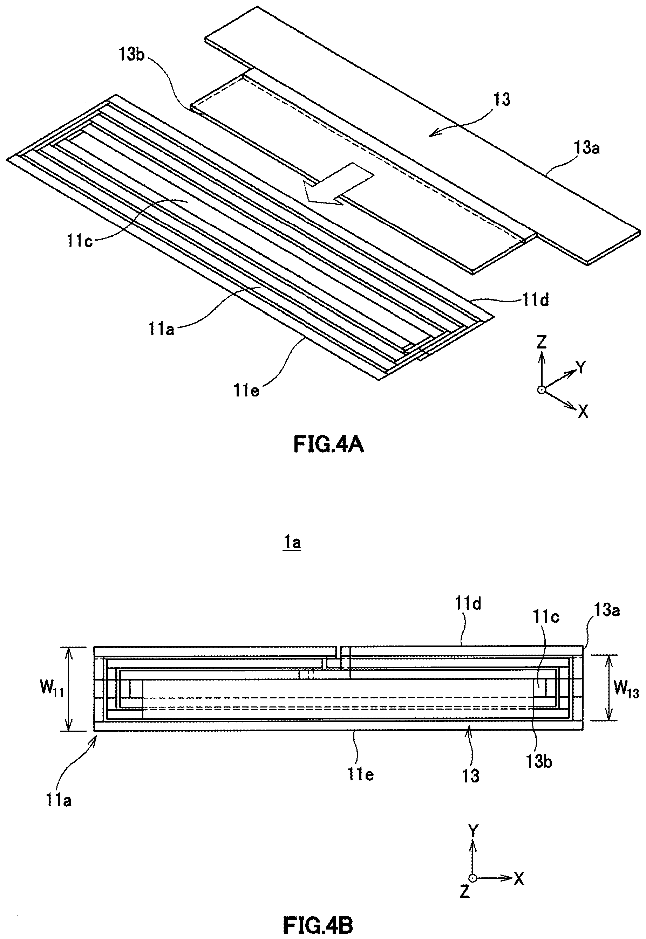

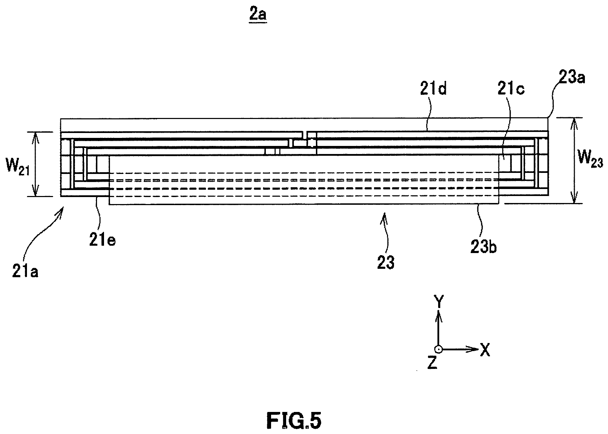

Moreover, from the viewpoints of both of achieving a good communication characteristic as indicated by a performance evaluation to be described later and downsizing, the antenna module 1a is designed such that, as shown in Fig. 4(A) and Fig. 4(B), in the y-axis direction in which the magnetic sheet 13 having a virtually T-letter shape is inserted into the center portion 11c of the antenna coil 11a, the magnetic sheet 13 is inserted in such a manner that the two end portions 13a and 13b thereof are respectively positioned closer to the center portion 11c than the two end portions 11d and 11e of the antenna coil 11a. In this manner, in the antenna module 1a, in the direction in which the magnetic sheet 13 and the antenna coil 11 a are inserted to each other, by making the width W13 of the magnetic sheet 13 shorter than the width W11 of the antenna coil 11a, it is possible to realize a communication characteristic better than that of an antenna module 2a according to a comparative example, for example, shown in Fig. 5.

As shown in Fig. 5, in the antenna module 2a according to the comparative example, in the y-axis direction in which the magnetic sheet 23 is inserted into the center portion 21 c of the antenna coil 21 a, the magnetic sheet 23 is inserted into the antenna coil 21 a in such a manner that the two end portions 21 d and 21e of the antenna coil 21a are respectively positioned closer to the center portion 21 c than the two end portions 23a and 23b of the magnetic sheet 23. That is, in the antenna module 2a, in directions in which the magnetic sheet 23 and the antenna coil 21 a are inserted to each other, the width W21 of the antenna coil 21a is made shorter than the width W23 of the magnetic sheet 23.

First, as a performance evaluation, a communication characteristic is evaluated at the time when each of the antenna modules 1a, 2a and the reader writer 120 are made face to face with each other, and a relative positional relationship in the x-axis direction is changed.

The specific evaluation conditions are explained as follows. A 461C made by Sony Corporation was used as the reader writer 120. The transmission frequency of a magnetic field was set to 13.56 MHz. Moreover, the outside shapes of the antenna coil 11a of the antenna module 1a and the magnetic sheet 23 of the antenna module 2a were respectively fixed to a rectangular shape of 50 mm × 8.5 mm defined on the xy plane.

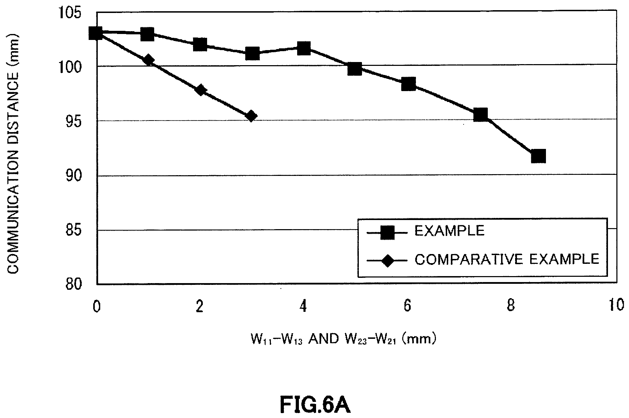

In this manner, with W11 and W23 being fixed to 8.5 mm, changes in communication distance when the difference between the widths of the antenna coil and the magnetic sheet, that is, W11 - W13, was changed from 0 mm to 8.5 mm, and when the difference therebetween, that is, W23 - W21, was changed from 0 mm to 3 mm, were shown in Fig. 6.

As clearly indicated by the results shown in Fig. 6, in the antenna module 1a, by making the width W13 of the magnetic sheet 13 shorter than the width W11 of the antenna coil 11 a in directions in which the magnetic sheet 13 and the antenna coil 11 a are inserted to each other, a superior communication characteristic can be realized. Moreover, when W11 - W13 becomes greater than 4 mm, the communication distance becomes shorter. Consequently, the width W13 of the magnetic sheet 13 is preferably set to virtually 1/2 to less than 1 in the ratio (W13/W11) thereof relative to the width W11 of the antenna coil 11a.

In this manner, the antenna module 1 a makes it possible to narrow the entire width of the antenna module by narrowing the width of the magnetic sheet 13 relative to the antenna coil 11a. That is, the antenna module 1a can make the entire module slimmer, while improving the communication characteristic.

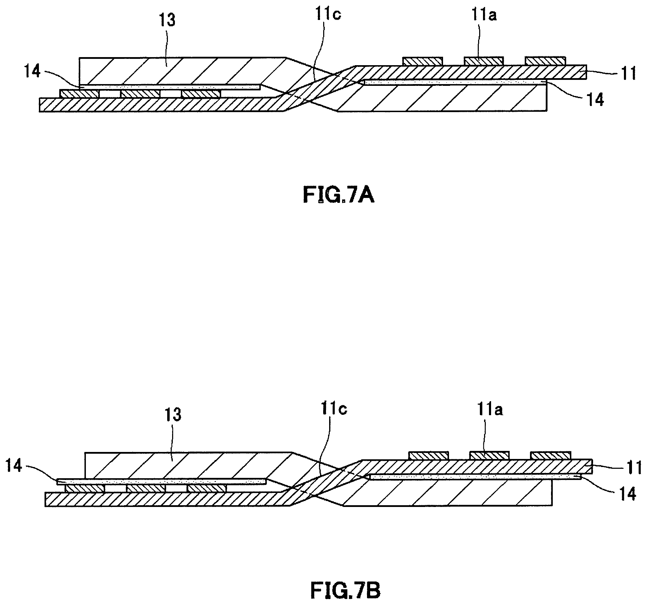

Moreover, the antenna module 1a is preferably maintained in a state where the magnetic sheet 13 and the antenna coil 11a are mutually superimposed , with an adhesive layer 14 stacked on the surface of at least either the antenna substrate 11 or the magnetic sheet 13 being interposed therebetween, as shown in Fig. 7. In this case, Fig. 7(A) shows a state in which the adhesive layer 14 is stacked on the surface of the antenna substrate 11 so as to be virtually coincident with the end portions 13a and 13b of the magnetic sheet 13, and Fig. 7(B) shows a state in which the adhesive layer 14 is stacked on the surface of the antenna substrate 11 so as to be virtually coincident with the end portions 11d and 11e of the antenna coil 11.

With this structure, in the antenna module 1 a, even when the end portions of the magnetic sheet 13 are cracked to cause a powder drop, the dropped powder can be received by the adhesive layer 14, so that it is consequently possible to prevent foreign matters from scattering in the portable telephone 130. In particular, in the case of using ferrite having a comparatively high magnetic characteristic as the magnetic sheet 13, since it is a sintered member and is easily cracked by an externally applied force to cause a powder drop, this structure is more suitably applied thereto. Moreover, from the viewpoint of efficiently preventing the powder drop of the magnetic sheet 13, as shown in Fig. 7(B), it is in particular preferable to stack the adhesive layer 14 on the surface of the antenna substrate 11 so as to make the width thereof virtually coincident with the width of the antenna coil 11.

Moreover, by allowing the antenna coil 11a to satisfy either a condition in which the antenna coil 11a is formed by an antenna substrate 11 having a flexible property or a condition in which the magnetic sheet 13 is flexible, an easily inserting process is achieved so that this structure is preferable from the viewpoint of further reducing the risk of powder dropping. Furthermore, by allowing it to follow one of the surfaces with the adhesive layer 14 being interpolated therebetween even when the degree of plane is biased, this structure becomes more preferable in that the mutually superimposed state can be maintained more positively.

Additionally, the antenna module to which the present invention is applied is not necessarily disposed in the gap 132, and for example, one portion of the antenna module 1a may be superimposed on the metal plate 133a that is made face to face with the reader writer 120, and since it is disposed on the outer circumferential portion of the metal plate 133a, a magnetic field oriented by the metal plate 133a can be effectively drawn to the antenna coil 11a. Moreover, in the antenna module to which the present invention is applied, the arrangement of the magnetic sheet and the antenna substrate is not limited by an arrangement condition defined by the above-mentioned relationship with the reader writer, and by adopting a structure in which the two ends of the magnetic sheet are located at positions closer to the center portion of the antenna coil than the two ends of the antenna coil in the direction in which the magnetic sheet is inserted to the center portion of the antenna coil, magnetic fluxes can be effectively drawn to the center portion of the antenna coil so that it becomes possible to downsize and to make thin a casing of an electronic apparatus when it is assembled into the electronic apparatus, while maintaining good communication characteristics. Reference Signs List

1... communication apparatus, 1a, 2a... antenna module, 11... antenna substrate, 11 a, 21 a... antenna coil, 11b... terminal unit, 11c, 21 c... center portion, 11d, 11e, 13a, 13b, 21d, 21e, 23a, 23b... end portion, 12... communication processing unit, 13, 23... magnetic sheet, 14... adhesive layer, 100... radio communication system, 120... reader writer, 121... antenna, 122... control substrate, 130... portable telephone, 131... casing, 131a... inner circumferential wall, 132... gap, 133... battery pack, 133a... metal plate, 133b... end portion

## Claims

1. An antenna apparatus (1a), which is assembled into an electronic apparatus and can be communicated upon receipt of a magnetic field transmitted from a transmitter, comprising:
an antenna substrate (11) on which an antenna coil (11a) that is inductively coupled to the transmitter is formed; and
a T-letter shaped magnetic sheet (13) for use in drawing the magnetic field transmitted from the transmitter to the antenna coil (11a),
wherein the magnetic sheet (13) is inserted into a center portion of the antenna coil formed on the antenna substrate, **characterized in that** the width (W13) of the magnetic sheet (13) as measured in the inserting direction is shorter than the width (W11) of the antenna coil (11a) and the magnetic sheet (13) being inserted in such a manner that two opposite ends (13a, 13b) in insertion direction of the magnetic sheet being located at positions closer to the center portion than two opposite ends (11d, 11e) of the antenna coil (11a) in the inserting direction thereof.

2. The antenna apparatus according to claim 1, wherein since the magnetic sheet (13) is inserted into a center portion of the antenna coil (11a) formed on the antenna substrate (11), the antenna coil (11a) and the magnetic sheet (13) are mutually superimposed in a manner so as to satisfy both of an arrangement condition in which the magnetic sheet (13) is positioned closer to the transmitter side than the antenna coil (11a) on the upstream side in the proceeding direction of the magnetic field oriented by a casing surface that is opposed to the transmitter and an arrangement condition in which the antenna coil is positioned closer to the transmitter side than the magnetic sheet (13) on the downstream side in the oriented proceeding direction.

3. The antenna apparatus (1a) according to claim 1, wherein measured in a direction in which the magnetic sheet (13) is inserted into the center portion of the antenna coil (11a), the magnetic sheet (13) has a width having a ratio relative to the width of the antenna coil (11a) of virtually 1/2 to less than 1.

4. The antenna apparatus (1a) according to claim 1, wherein the magnetic sheet (13) and the antenna coil (11a) are maintained in a state in which the magnetic sheet (13) and the antenna coil (11a) are mutually superimposed with an adhesive layer (14) being interposed therebetween.

5. The antenna apparatus (1a) according to claim 1, wherein at least either one of conditions in which the antenna coil (11a) is formed by an antenna substrate (11) having a pliable property or in which the magnetic sheet (13) has a flexible property is satisfied.

6. A communication apparatus (1), which can be communicated upon receipt of a magnetic field transmitted from a transmitter, comprising:
an antenna substrate (11) on which an antenna coil (11a) that is inductively coupled to the transmitter is formed;
a T-letter shaped magnetic sheet (13) for use in drawing a magnetic field transmitted from the transmitter to the antenna coil (11a); and
a communication processing unit (12) that is driven by an electric current flowing through the antenna coil (11a), and carries out communication between the transmitter,
wherein since the magnetic sheet (13) is inserted into a center portion of the antenna coil (11a) formed on the antenna substrate, the antenna coil and the magnetic sheet are mutually superimposed on each other in a manner so as to satisfy both of an arrangement condition in which the magnetic sheet is positioned closer to the transmitter side than the antenna coil (11a) on the upstream side in the proceeding direction of the magnetic field oriented by a casing surface that is opposed to the transmitter and an arrangement condition in which the antenna coil is positioned closer to the transmitter side than the magnetic sheet on the downstream side in the oriented proceeding direction, and
**characterized in that** the width (W13) of the magnetic sheet (13) as measured in the inserting direction is shorter than the width (W11) of the antenna coil (11a) and the magnetic sheet (13) being inserted in such a manner that in the inserting direction into the center portion of the antenna coil, two opposite ends (13a, 13b) in insertion direction of the magnetic sheet (13) are located at positions closer to the center portion than two opposite ends (11d, 11e) of the antenna coil (11a).

7. The communication apparatus (1) according to claim 6, wherein the antenna coil (11a) is wound in such a manner that an opening of the antenna coil is positioned in a gap (132) between an end portion of a conductor that is made face to face with the transmitter inside a casing (131) of the electronic apparatus and an inner circumferential wall (131a) of the casing (131).

8. The communication apparatus according to claim 6, wherein the antenna substrate (11) and the magnetic sheet (13) are disposed on an outer circumferential portion of the casing surface that is made face to face with the transmitter.

## Patentansprüche

1. Antennenvorrichtung (1a), welche in eine elektronische Vorrichtung eingebaut ist und mit der bei Empfang eines von einem Sender gesendeten Magnetfeldes kommuniziert werden kann, umfassend:
ein Antennensubstrat (11), auf welchem eine Antennenspule (11a), die mit dem Sender induktiv gekoppelt ist, ausgebildet ist; und
eine T-förmige Magnetplatte (13) zur Verwendung beim Ziehen des vom Sender gesendeten Magnetfeldes zur Antennenspule (11a),
wobei die Magnetplatte (13) in einen Mittelabschnitt der auf dem Antennensubstrat ausgebildeten Antennenspule eingesetzt ist, **dadurch gekennzeichnet, dass** die Breite (W13) der Magnetplatte (13), wie in der Einsetzrichtung gemessen, kürzer ist als die Breite (W11) der Antennenspule (11a) und die Magnetplatte (13) auf solch eine Weise eingesetzt ist, dass zwei entgegengesetzte Enden (13a, 13b) in Einsetzrichtung der Magnetplatte an Positionen gelegen sind, die dem Mittelabschnitt näher sind als zwei entgegengesetzte Enden (11d, 11e) der Antennenspule (11a) in deren Einsetzrichtung.

2. Antennenvorrichtung nach Anspruch 1, wobei, da die Magnetplatte (13) in einen Mittelabschnitt der auf dem Antennensubstrat (11) ausgebildeten Antennenspule (11a) eingesetzt ist, die Antennenspule (11a) und die Magnetplatte (13) in einer Weise wechselseitig überlagert sind, so dass beide einer Anordnungsbedingung, nach welcher auf der stromaufwärtigen Seite in der Verlaufsrichtung des Magnetfeldes, die durch eine Gehäuseoberfläche orientiert ist, die dem Sender gegenüberliegt, die Magnetplatte (13) näher zur Senderseite als die Antennenspule (11a) positioniert ist, und einer Anordnungsbedingung erfüllt sind, nach welcher auf der stromabwärtigen Seite in der orientierten Verlaufsrichtung die Antennenspule näher zur Senderseite als die Magnetplatte (13) positioniert ist.

3. Antennenvorrichtung (1a) nach Anspruch 1, wobei, gemessen in einer Richtung, in welcher die Magnetplatte (13) in den Mittelabschnitt der Antennenspule (11a) eingesetzt ist, die Magnetplatte (13) eine Breite mit einem Verhältnis relativ zur Breite der Antennenspule (11a) von nahezu 1/2 bis weniger als 1 aufweist.

4. Antennenvorrichtung (1a) nach Anspruch 1, wobei die Magnetplatte (13) und die Antennenspule (11a) in einem Zustand gehalten werden, in welche die Magnetplatte (13) und die Antennenspule (11a) mit einer dazwischen angeordneten Klebeschicht (14) wechselseitig überlagert sind.

5. Antennenvorrichtung (1a) nach Anspruch 1, wobei zumindest eine von Bedingungen erfüllt ist, nach welchen die Antennenspule (11a) durch ein Antennensubstrat (11) mit einer biegsamen Eigenschaft ausgebildet ist oder nach welchen die Magnetplatte (13) eine biegsame Eigenschaft aufweist.

6. Kommunikationsvorrichtung (1), mit welcher bei Empfang eines von einem Sender gesendeten Magnetfeldes kommuniziert werden kann, umfassend:
ein Antennensubstrat (11), auf welchem eine Antennenspule (11a), die mit dem Sender induktiv gekoppelt ist, ausgebildet ist;
eine T-förmige Magnetplatte (13) zur Verwendung beim Ziehen eines vom Sender gesendeten Magnetfeldes zur Antennenspule (11a); und
eine Kommunikationsverarbeitungseinheit (12), die durch einen durch die Antennenspule (11a) fließenden elektrischen Strom gespeist wird und eine Kommunikation mit dem Sender ausführt,
wobei, da die Magnetplatte (13) in einen Mittelabschnitt der auf dem Antennensubstrat ausgebildeten Antennenspule (11a) eingesetzt ist, die Antennenspule und die Magnetplatte auf solch eine Weise aufeinander wechselseitig überlagert sind, so dass beide einer Anordnungsbedingung, nach welcher auf der stromaufwärtigen Seite in der Verlaufsrichtung des Magnetfeldes, die durch eine Gehäuseoberfläche orientiert ist, die dem Sender gegenüberliegt, die Magnetplatte näher zur Senderseite als die Antennenspule (11a) positioniert ist, und einer Anordnungsbedingung erfüllt sind, nach welcher auf der stromabwärtigen Seite in der orientierten Verlaufsrichtung die Antennenspule näher zur Senderseite als die Magnetplatte positioniert ist, und
**dadurch gekennzeichnet, dass** die Breite (W13) der Magnetplatte (13), wie in der Einsetzrichtung gemessen, kürzer ist als die Breite (W11) der Antennenspule (11a) und die Magnetplatte (13) auf solch eine Weise eingesetzt ist, dass in der Einsetzrichtung in den Mittelabschnitt der Antennenspule zwei entgegengesetzte Enden (13a, 13b) in Einsetzrichtung der Magnetplatte (13) an Positionen gelegen sind, die dem Mittelabschnitt näher sind als zwei entgegengesetzte Enden (11d, 11e) der Antennenspule (11a).

7. Kommunikationsvorrichtung (1) nach Anspruch 6, wobei die Antennenspule (11a) auf solch eine Weise gewickelt ist, dass eine Öffnung der Antennenspule in einer Lücke (132) zwischen einem Endabschnitt eines Leiters, der dem Sender innerhalb eines Gehäuses (131) der elektronischen Vorrichtung zugewandt geschaffen ist, und einer inneren Umfangswand (131a) des Gehäuses (131) positioniert ist.

8. Kommunikationsvorrichtung nach Anspruch 6, wobei das Antennensubstrat (11) und die Magnetplatte (13) auf einem äußeren Umfangsabschnitt der Gehäuseoberfläche, der dem Sender zugewandt geschaffen ist, angeordnet sind.

## Revendications

1. Appareil formant antenne (1a) qui est monté dans un appareil électronique et qui peut communiquer lors de la réception d'un champ magnétique transmis à partir d'un émetteur, comprenant :
un substrat d'antenne (11) sur lequel est formée une bobine d'antenne (11a) qui est reliée de manière inductive à l'émetteur ; et
une feuille magnétique en forme de T (13) à utiliser pour amener le champ magnétique, transmis à partir de l'émetteur, dans la bobine d'antenne (11a),
la feuille magnétique (13) étant insérée dans une partie centrale de la bobine d'antenne formée sur le substrat d'antenne, **caractérisé en ce que** la largeur (W13) de la feuille magnétique (13), mesurée dans le sens d'insertion, est inférieure à la largeur (W11) de la bobine d'antenne (11a), et la feuille magnétique (13) étant insérée de telle sorte que deux extrémités opposées (13a, 13b), dans le sens d'insertion de la feuille magnétique, se trouvent plus près de la partie centrale que deux extrémités opposées (11d, 11e) de la bobine d'antenne (11a) dans le sens d'insertion.

2. Appareil formant antenne selon la revendication 1, dans lequel, étant donné que la feuille magnétique (13) est insérée dans une partie centrale de la bobine d'antenne (11a) formée sur le substrat d'antenne (11), la bobine d'antenne (11a) et la feuille magnétique (13) sont superposées de manière à satisfaire à la fois à une condition de disposition selon laquelle la feuille magnétique (13) se trouve plus près du côté émetteur que la bobine d'antenne (11a), sur le côté amont dans le sens d'avance du champ magnétique orienté par une surface de boîtier opposée à l'émetteur, et à une condition de disposition selon laquelle la bobine d'antenne se trouve plus près du côté émetteur que la feuille magnétique (13), sur le côté aval dans le sens d'avance orienté.

3. Appareil formant antenne (1a) selon la revendication 1, dans lequel la feuille magnétique (13), mesurée dans un sens dans lequel elle est insérée dans la partie centrale de la bobine d'antenne (11a), a une largeur qui présente un rapport à la largeur de ladite bobine d'antenne (11a) globalement de ½ à moins de 1.

4. Appareil formant antenne (1a) selon la revendication 1, dans lequel la feuille magnétique (13) et la bobine d'antenne (11a) sont maintenues dans un état dans lequel la feuille magnétique (13) et la bobine d'antenne (11a) sont superposées, avec une couche d'adhésif (14) entre les deux.

5. Appareil formant antenne (1a) selon la revendication 1, dans lequel l'une au moins des conditions selon lesquelles la bobine d'antenne (11a) est formée par un substrat d'antenne (11) présentant une propriété de pliage ou selon lesquelles la feuille magnétique (13) présente une propriété de flexibilité, est satisfaite.

6. Appareil de communication (1) qui peut communiquer lors de la réception d'un champ magnétique transmis à partir d'un émetteur, comprenant :
un substrat d'antenne (1) sur lequel est formée une bobine d'antenne (11a) qui est reliée de manière inductive à l'émetteur ;
une feuille magnétique en forme de T (13) à utiliser pour amener un champ magnétique, transmis à partir de l'émetteur, dans la bobine d'antenne (11a) ; et
une unité de traitement de communication (12) qui est commandée par un courant électrique traversant la bobine d'antenne (11a), et qui réalise la communication entre l'émetteur,
étant précisé qu'étant donné que la feuille magnétique (13) est insérée dans une partie centrale de la bobine d'antenne (11a) formée sur le substrat d'antenne, la bobine d'antenne et la feuille magnétique sont superposées de manière à satisfaire à la fois à une condition de disposition selon laquelle la feuille magnétique se trouve plus près du côté émetteur que la bobine d'antenne (11a), sur le côté amont dans le sens d'avance du champ magnétique orienté par une surface de boîtier opposée à l'émetteur, et à une condition de disposition selon laquelle la bobine d'antenne se trouve plus près du côté émetteur que la feuille magnétique, sur le côté aval dans le sens d'avance orienté, et
**caractérisé en ce que** la largeur (W13) de la feuille magnétique (13), mesurée dans le sens d'insertion, est inférieure à la largeur (W11) de la bobine d'antenne (11a), et la feuille magnétique (13) étant insérée de telle sorte que dans le sens d'insertion dans la partie centrale de la bobine d'antenne, deux extrémités opposées (13a, 13b), dans le sens d'insertion de la feuille magnétique (13), se trouvent plus près de la partie centrale que deux extrémités opposées (11d, 11e) de la bobine d'antenne (11a).

7. Appareil de communication (1) selon la revendication 6, dans lequel la bobine d'antenne (11a) est enroulée de telle sorte qu'une ouverture de ladite bobine d'antenne soit positionnée dans un espace (132) entre une partie d'extrémité d'un conducteur qui fait face à l'émetteur à l'intérieur d'un boîtier (131) de l'appareil électronique, et une paroi circonférentielle intérieure (131a) du boîtier (131).

8. Appareil de communication selon la revendication 6, dans lequel le substrat d'antenne (11) et la feuille magnétique (13) sont disposées sur une partie circonférentielle extérieure de la surface de boîtier qui fait face à l'émetteur.
